**Europäisches Patentamt**

**European Patent Office**

**Office européen des brevets**

(11) Veröffentlichungsnummer: **0 207 444**
**A2**

## (12) EUROPÄISCHE PATENTANMELDUNG

(21) Anmeldenummer: 86108694.0

(22) Anmeldetag: 26.06.86

(51) Int. Cl.⁴: **B 29 C 51/34**

(30) Priorität: 05.07.85 DE 3524122

(43) Veröffentlichungstag der Anmeldung:
07.01.87 Patentblatt 87/2

(84) Benannte Vertragsstaaten:
AT BE CH DE FR GB IT LI NL SE

(71) Anmelder: Baus, Heinz Georg
Wartbodenstrasse 35
CH-3626 Hünibach-Thun(CH)

(72) Erfinder: Baus, Heinz Georg
Wartbodenstrasse 35
CH-3626 Hünibach-Thun(CH)

(74) Vertreter: Klose, Hans, Dipl.-Phys. et al,
Kurfürstenstrasse 32
D-6700 Ludwigshafen(DE)

(54) Verfahren zum Tiefziehen eines Bauteiles.

(57) Nach dem Verfahren zum Tiefziehen kann ein Bauteil (2), insbesondere eine Duschtasse, aus einem verformbaren Werkstoff gefertigt werden. Aus dem Bauteil (2) ist ein Formträger (22), der insbesondere einen Formteil (21) in einer Entformungsrichtung (42) entfernbar, wobei dem Formträger (22) ein quer zur Entformungsrichtung (42) sich erstreckender Einlegeteil (20) zugeordnet ist, um in dem Bauteil einen vorstehenden Wulst (12) und/oder eine Hinterschneidung (44) zu erzeugen. Es soll die Aufgabe gelöst werden, mit geringem Fertigungsaufwand ein Bauteil herzustellen, das in eine quer zur Entformungsrichtung verlaufenden Ebene einen derartigen Wulst (12) bzw. eine Hinterschneidung (44) aufweist. Zur Lösung wird vorgeschlagen, daß der Einlegeteil (20) aus einem teilweise flexiblen Werkstoff besteht und in einer quer zur Entformungsrichtung (42) verlaufenden Ebene (11) auf dem Formträger (22) angeordnet wird, wobei in dieser Ebene (11) eine Ausbuchtung (32) über eine Seitenwand (31) des Formträgers (22) vorsteht. Bei der Herstellung wird aus dem Bauteil (2) zunächst der Formträger (22) und/oder der Formteil (21) in der Entformungsrichtung (42) entfernt und anschließend der im Bauteil (2) noch verbliebene flexible Einlegeteil (20) unter nachgiebiger Verformung herausgezogen.

FIG. 3

Patentanwalt Dipl.-Phys. HANS KLOSE
Zugelassener Vertreter vor dem Europäischen Patentamt — 1

6700 Ludwigshafen
Kurfürstenstraße 62
0207444

Anmelder: Heinz Georg Baus, Wartbodenstr. 35
CH-3626 Hünibach/Thun

Verfahren zum Tiefziehen eines Bauteiles

Die Erfindung betrifft ein Verfahren zum Tiefziehen eines Bauteiles, insbesondere einer Duschtasse, aus einem verformbaren Werkstoff, bei welchem Verfahren aus dem Bauteil ein Formträger mit einem Formteil entfernbar ist, wobei dem Formteil ein quer zur Entformungsrichtung sich erstreckender Einlegeteil zugeordnet ist, um in dem Bauteil einen vorstehenden Wulst und/oder eine Hinterschneidung zu erzeugen.

Es ist bekannt Bauteile, insbesondere Duschtassen oder dergleichen durch Tiefziehen zu fertigen. Schwierigkeiten bereitet hierbei die Formgebung eines Randes. Im Hinblick auf eine einfache Fertigung wurden bisher Hinterschneidungen, vorstehende Bereiche o.ä. vermieden. Die Innenwand und die Außenwand von nach dem Tiefziehverfahren gefertigten Duschtassen verliefen im wesentlichen vertikal und parallel zueinander, was nachteilig für die Formgebung und das Design eines derart durch Tiefziehen gefertigten Bauteiles ist. Besonders nachteilig war dies bei Duschtassen, Waschbecken oder dergleichen mit einem gebogenen oder als Rundung ausgebildeten Rand.

Patentanwalt Dipl.-Phys. HANS KLOSE
Zugelassener Vertreter vor dem Europäischen Patentamt — 2 — 6700 Ludwigshafen
Kurfürstenstraße 82

0207444

In der DE-AS 11 68 056 ist ein Ziehwerkzeug zum Herstellen einer vakuumtiefgezogenen Kunststoff-Formplatte beschrieben. Mit dem Ziehwerkzeug läßt sich beispielsweise die Innenplatte einer Kühlschranktür fertigen, welche in Entformungsrichtung hinterschnittene Plattenteile aufweist. Die zur Formung der genannten hinterschnittenen Plattenteile vorgesehenen Werkzeugteile sind mit einer Hauptform über Federn verbunden, um zusätzliche Arbeitsgänge für die Erzeugung der Hinterschneidung zu vermeiden. Mit dem bekannten Ziehwerkzeug lassen sich nur solche Hinterschneidungen herstellen, die in einer einzigen Richtung quer zur Entformungsrichtung liegen. Erstreckt sich die Hinterschneidung hingegen in einer Ebene, die im wesentlichen senkrecht zur Entformungsrichtung liegt und weist tiefgezogene Bauteil insbesondere einen umlaufenden Rand auf, so liegt ein dreidimensionales Problem vor, das mit dem vorbekannten Ziehwerkzeug nicht ohne weiteres zu lösen ist.

Hiervon ausgehend liegt der Erfindung die Aufgabe zugrunde, mit einem geringen Aufwand ein Verfahren zum Tiefziehen und ferner ein demgemäß zu fertigendes Bauteil vorzuschlagen, dessen Rand oder Wand mit der gewünschten Formgebung bzw. einer Hinterschneidung und/oder einen Wulst in einer Ebene quer zur Entformungsrichtung versehen werden kann. Die Vorteile der einfachen Fertigung *des Sanitär-Bauteiles,* und insbesondere einer Duschtasse sollen erhalten bleiben und gleichwohl soll eine ansprechende Formgebung des Bauteils und insbesondere des einem Betrachter zugewandten Randes erreicht werden. Das Bauteil soll eine hohe Maßhaltigkeit bei einfacher Fertigung aufweisen, wobei der Rand und die an dem Rand befindliche Hinterschneidung nicht nur in der genannten ersten Richtung quer zur Entformungsrichtung, sondern in einer weiteren Richtung und folglich insgesamt in einer Ebene quer zur Entformungsrichtung verlaufen soll. Ferner soll das Verfahren mit geringem Aufwand an Werkzeugen und bei niedrigem Arbeitsaufwand eine problemlose Fertigung ermöglichen. Auch soll die Anordnung geschaffen werden, mit welcher ein derartiges Bauteil kostengünstig und mit einem geringen Aufwand an Maschinenteilen gefertigt werden kann.

Zur Lösung dieser Aufgabe wird vorgeschlagen, daß der Einlegeteil aus einem teilweise flexiblen Werkstoff, insbesondere PU-Schaum oder Integralschaum, besteht und in einer Ebene quer zur Entformungsrichtung auf dem Formträger angeordnet wird, wobei in dieser Ebene eine Ausbuchtung über eine Seitenwand des Formträgers vorsteht, daß aus dem *bevorzugt im Sanitärbereich einsetzbaren* Bauteil zunächst der Formträger und/oder der Formteil in der Entformungsrichtung entfernt wird und daß der in dem Bauteil noch verbliebene flexible Einlegeteil unter nachgiebiger Verformung anschließend aus dem Bauteil herausgezogen wird.

Das erfindungsgemäß vorgeschlagene Verfahren erfordert einen geringen Fertigungsaufwand und ermöglicht gleichwohl eine ansprechende und funktionsgerechte Ausbildung des Bauteiles, das insbesondere als eine Duschtasse ausgebildet ist. Erfindungsgemäß gelangt ein warmverformbarer Werkstoff, Kunststoff oder Thermoplast, insbesondere aus ABS oder PMMA bzw. Acryl oder Polyacryl zum Einsatz. Derartige warmverformbare Werkstoffe lassen sich sehr zweckmäßig nach Erwärmung tiefziehen, wobei ein vergleichweise geringer Arbeits- und Werkzeugaufwand gegeben ist. Wesentlich ist ferner im Vergleich mit anderen Werkstoffen, genannt sei hier vor allem Keramik, das erheblich geringere Gewicht, wodurch für die Handhabung bei der Fertigung bis hin zur Montage in einem Badezimmer oder dergleichen erhebliche Vorteile gegeben sind. Der aus einem zumindest teilweise flexiblen Werkstoff bestehende Einlegeteil ergibt eine besonders einfache und funktionssichere Durchführbarkeit des Verfahrens. So kann der Einlegeteil nicht nur in einer Richtung, sondern in einer Ebene quer zur Entformungsrichtung einer Ausbuchtung, einen Ansatz oder ähnliches aufweisen und gleichwohl aufgrund der nachgiebigen Verformbarkeit in einfacher Weise aus dem Bauteil entfernt werden. Erfindungsgemäß ist der Einlegeteil in der Weise elastisch nachgiebig, daß einerseits beim Tiefziehen eine stabile Formgebung gewährleistet wird und andererseits eine aufgrund hinreichender Flexibilität der
Einlegeteil aus dem Bauteil nachfolgend herausgelöst werden kann. Als geeignete Werkstoffe haben sich hierbei
insbesondere PU-Schaum oder ein Integralschaum erwiesen,
doch können auch vergleichbare Werkstoffe für den Einlegeteil zum Einsatz gelangen. Erfindungsgemäß wird einerseits
eine hinreichende Formstabilität des Einlegeteiles und
andererseits eine ausreichende nachgiebige Verformbarkeit
erreicht, um den Einlegeteil aus dem bogenförmigen Rand
herauswinden zu können und nachfolgend erfindungsgemäß
immer wieder erneut zum Tiefziehen weiterer Bauteile zu
nutzen.

Das Bauteil wird zwar insbesondere als eine Duschtasse
ausgebildet, doch liegen im Rahmen der Erfindung auch
andere Anwendungsgebiete, wie Badewannen, Waschbecken und
dergleichen. In allen Anwendungsfällen weist das ⌐Sanitär-⌐Bauteil
einerseits ein geringes Gewicht und niedrigen Materialeinsatz auf und andererseits ist eine abgerundete Formgebung
der Flächen des gebogenen Randes gegeben. Von maßgebender
Bedeutung ist ferner die im wesentlichen gleichmäßige
Materialstärke des Bauteiles. Dies ist sehr wesentlich im
Bereich des Randes sowie Wulstes bei Anordnung im Einstiegsbereich einer Duschtasse oder dergleichen; die bei
rechtwinkligen Kanten in der Praxis zu befürchtenden
Materialschwächungen werden durch den Wulst vorteilhaft
vermieden. Der Wulst kann an der Außenwand oder der Innenwand vorgesehen sein; dies wäre insbesondere bei einem
Waschbecken von Nutzen, um ein Herausspritzen von Wasser
zu verhindern. Aufgrund des wulstartig abgerundeten Randes
wird eine äußerst ansprechende Formgebung erreicht. Dies
ist von besonderer Bedeutung bei einer Duschtasse, und
zwar an deren einem Betrachter zugewandten äußeren Rand.
Das erfindungsgemäße Tiefziehteil weist eine hohe Stabilität auf und die obere horizontale Auflagefläche des Randes
kann mit geringem Materialeinsatz vergleichsweise breit
ausgebildet sein, um beispielsweise eine Duschtrennwand
auf der oberen horizontalen Fläche befestigen zu können.

Patentanwalt Dipl.-Phys. HANS KLOSE
Zugelassener Vertreter vor dem Europäischen Patentamt   – 5 –

6700 Ludwigshafen
0207444

Das erfindungsgemäße Bauteil weist einen umlaufenden Rand auf, der einen Innenraum umschließt. Zumindest ein Teil dieses umlaufenden Randes ist in einer Ebene quer zur Entformungsrichtung gebogen. Die Hinterschneidung bzw. der Wulst erstreckt sich erfindungsgemäß nicht nur in einer Richtung sondern in der besagten Ebene, also in zwei Richtungen. Das für die Hinterschneidung bzw. den Wulst erforderliche Einlegeteil besteht aus einem flexiblen Werkstoff. Erfindungsgemäß ist das Einlegeteil in der Weise flexibel, daß es nach dem Tiefziehen aus dem Rand des Bauteiles herausgewunden oder herausgezogen werden kann. Andererseits weist das erfindungsgemäße Einlegeteil eine derartige Festigkeit und Härte auf, daß beim Tiefziehen die gewünschte Formgebung gleichwohl erreicht wird; aufgrund der vorgesehenen in der besagten Weise eingeschränkten Flexibilität wird eine unzulässige Verformung beim Tiefziehen verhindert. Als geeignete Werkstoffe sei PU-Schaum oder Integralschaum genannt, welche die erfindungsgemäßen Materialeigenschaften aufweisen. Dies gilt zumindest im Bereich der mit dem Tiefziehteil in Berührung gelangenden Oberfläche des Einlegeteiles. Diese Oberfläche ist erfindungsgemäß auch stabilisiert und verfestigt. Dies geschieht insbesondere durch Vernetzen oder ähnliche Verfahren bei Schaumstoffen oder sonstigen polymeren Werkstoffen. Da ferner ein Innenteil des Formträgers zusammen mit dem Einlegeteil für den Rand vorgesehen ist bzw. nach dem Tiefziehen in dem Rand sich befindet, wird gleichwohl eine hohe Formstabilität sichergestellt. Der Innenteil oder Formteil besteht erfindungsgemäß aus einem festen Werkstoff, wie insbesondere einem Metall, und ergibt damit die hinreichende Stabilisierung des in der oben besagten Weise flexiblen Einlegeteiles. Der Innenteil und das Einlegeteil erstrecken sich gemeinsam in Längsrichtung des in der Ebene gebogenen Randes des Bauteiles.

In einer weiteren Ausgestaltung geht die Außenfläche des Wulstes oben kontinuierlich in die obere, im wesentlichen horizontale Fläche des Randes und unten in die im wesentlichen vertikale Seitenfläche über. Der Rand ist somit in seinem oberen Bereich durch den erfindungsgemäßen Wulst verbreitert und verstärkt und mit geringem Materialeinsatz wird eine hohe Stabilität und Funktionssicherheit erreicht. Im Rahmen der Erfindung erstreckt sich der Wulst zumindest näherungsweise über die gesamte Höhe des Randes, der über die Bodenfläche des Bauteiles vorsteht.

Die zur Herstellung und insbesondere dem Tiefziehen des Bauteiles vorgeschlagene Anordnung weist einen Formträger mit einem für den Rand vorgesehenen Formteil oder Innenteil auf, dem ein teilweise flexibles Einlegeteil mit einer nach außen weisenden Abrundung zugeordnet ist. Der Einlegeteil ist mit der Abrundung und seiner gesamten Außenkontur entsprechend der zu erreichenden Formgebung des äußeren Randes ausgestaltet. Der Einlegeteil ist zumindest in Richtung seiner Längsachse derart flexibel, daß er nach dem Tiefziehen aus dem Rand herausgewunden werden kann. Der Einlegeteil und der zugeordnete Innenteil des Formträgers sind entsprechend der Kontur des Randes gebogen. Die Ausbuchtung bzw. der Wulst liegt somit in einer Ebene, die im wesentlichen senkrecht zur Entformungsrichtung liegt. Erfindungsgemäß erstreckt sich der Innenteil des Formträgers entgegen der Entformungsrichtung in den Rand, und er wird beim Entformen als erstes aus dem Rand entfernt. Aufgrund der flexiblen Ausgestaltung des Einlegeteiles kann dieser erfindungsgemäß aus dem Rand herausgewunden werden. Die Trennfläche bzw. Trennflächen zwischen dem Innenteil und dem Einlegeteil verlaufen erfindungsgemäß in Längsrichtung des gebogenen Randes. Der Rand ist über einen Winkelbereich von bevorzugt etwa 90° gebogen. Die flexible Ausgestaltung des Einlegeteiles ermöglicht dessen Entfernung aus dem Rand in drei Richtungen praktisch gleichzeitig. Erfindungsgemäß wird also der Einlegeteil nicht nur in der Entformungsrichtung sowie zu einer einzigen hierzu senkrechten Richtung, sondern auch in einer dritten Richtung entsprechend der gebogenen Form des Randes bewegt.

**Patentanwalt Dipl.-Phys. HANS KLOSE**
Zugelassener Vertreter vor dem Europäischen Patentamt — 7 —

6700 Ludwigshafen
Kurfürstenstraße 32
0207444

In einer besonderen Ausgestaltung liegen der flexible Einlegeteil und der starre Innenteil mit gebogenen, in Längsrichtung des Randes verlaufenden Anlageflächen aneinander. Diese erfindungsgemäßen Anlageflächen erstrecken sich praktisch über die gesamte Höhe des Randes bzw. des Wulstes. Zweckmäßig liegen die besagten Anlageflächen etwa parallel zur Entformungsrichtung, wobei zwecks leichterer Entformung im Rahmen der Erfindung auch eine leicht konische Anordnung liegt, um beim Entformen den Innenteil leicht aus dem Rand herausfahren zu können. Erfindungsgemäß ist im Bereich des über einen Winkel von etwa 90° sich erstreckenden Teiles des Randes in der angegebenen Weise der flexible Einlegeteil zusammen mit dem starren Innenteil vorgesehen. Im übrigen ist für die Herstellung des Randes hingegen ein einziger Innenteil erforderlich.

In einer besonderen Ausgestaltung ist der Einlegeteil zumindest an seiner mit dem verformbaren Werkstoff in Berührung gelangenden Oberfläche versteift und / oder verfestigt. Dies kann durch Aufbringen eines entsprechenden Überzuges mit entsprechender Härte erreicht werden. Auch eine geeignete Oberflächenbehandlung führt zu dem gleichen Ergebnis. Insbesondere bei PU-Schäumen läßt sich durch Vernetzen der Oberfläche die erfindungsgemäße Verfestigung erzielen. Gleichwohl bleibt der Einlegeteil im übrigen hinreichend flexibel, um aus dem Rand herausgezogen werden zu können. Aufgrund der verfestigten Oberfläche wird einerseits eine hohe Formbeständigkeit erreicht und andererseits auch die Abnutzung während der Fertigung des Tiefziehteiles nicht unwesentlich reduziert.

In einer weiteren Ausgestaltung ist der Einlegeteil quer zur Längsrichtung des gebogenen Randes in wenigstens zwei Teile unterteilt. Obgleich grundsätzlich ein über die gesamte Länge des gebogenen Randes sich erstreckender Einlegeteil vorgesehen werden soll, kann in bestimmten Anwendungsfällen die Unterteilung des Einlegeteiles von Vorteil sein. Dies gilt insbesondere bei großen Bauteilen oder auch bei mehrfach gebogenen oder abgewinkelten Formen. Die Handhabung bei der Herstellung kann auf diese Weise vereinfacht werden.

Die Erfindung wird nachfolgend anhand der in der Zeichnung dargestellten Ausführungsbeispiele näher erläutert. Es zeigen:

Fig. 1    eine seitliche Ansicht eines als Duschtasse ausgebildeten Bauteils,

Fig. 2    eine Aufsicht auf das Bauteil gemäß Fig. 1 von
          oben,

Fig. 3    vergrößert einen Schnitt entlang Schnittlinie III
          gemäß Fig. 2.

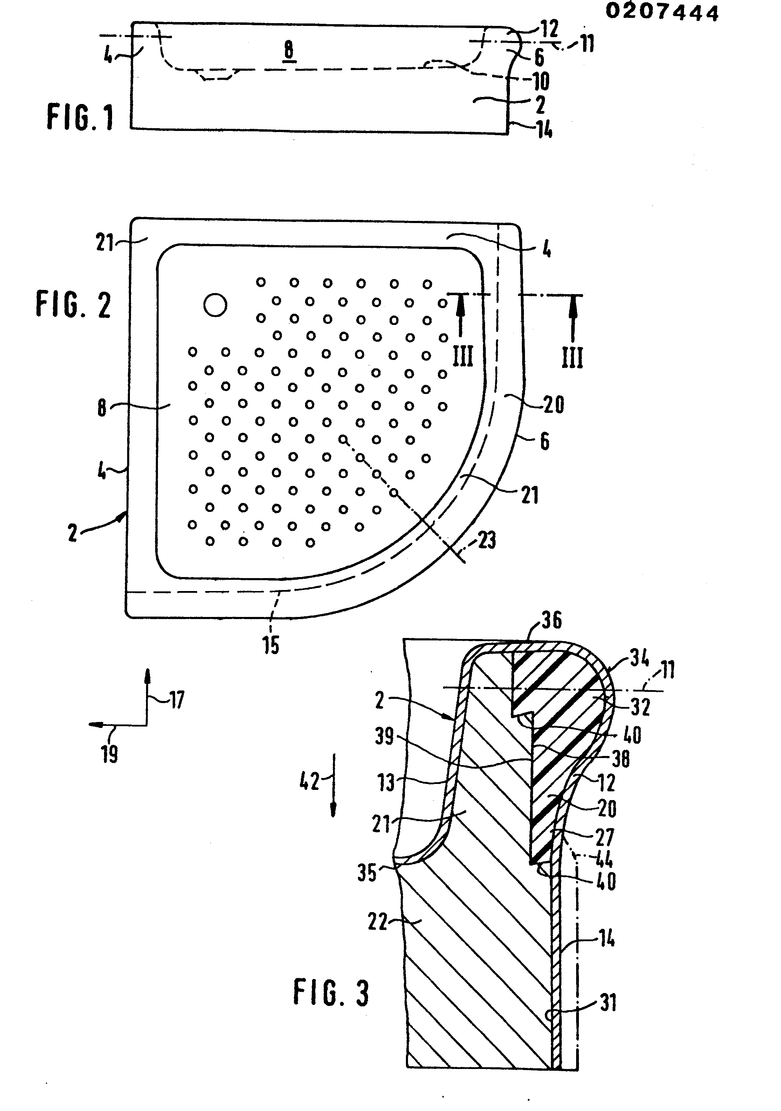

Fig. 1 zeigt in einer seitlichen Ansicht das Bauteil 2, das als eine Duschtasse für eine Runddusche ausgebildet ist und nachfolgend der Einfachheit halber immer als Duschtasse 2 bezeichnet wird. Die Duschtasse 2 weist er- findungsgemäß einen umlaufenden Rand 4, 6 auf, der einen Innenraum 8 über einer Bodenfläche 10 umgibt. Der einem Betrachter im eingebauten Zustand der Duschtasse zugewandte Bereich des Randes 6 weist in einer Ebene 11 außen einen Wulst 12 auf, der über die im wesentlichen vertikale Seitenfläche 14 der Duschtasse 2 vorsteht.

In der Aufsicht gemäß Fig. 2 ist die gesamte Duschtasse 2 zu erkennen. Es sind zwei gerade Teile des Randes 4 vorhanden, mit welchen die Duschtasse nach dem Einbau beispielsweise an den Raumwänden im Eck eines Badezimmers zur Anlage gebracht wird. Zwischen den beiden Teilen 4 ist der gebogene Rand 6 gut zu erkennen, wobei dieser Rand 6 einen mittleren gekrümmten Bereich aufweist, an welchen sich zur Seite hin weitgehend gerade Bereiche anschließen. Im Inneren des Randes 6 ist ein Einlegeteil 20 angedeutet. Dieser Einlegeteil 20 bildet zusammen mit einem inneren Formteil 21 die Form zur Herstellung des gebogenen Randes 6. Wie durch die gestrichelte Linie 15 angedeutet, sind der Einlegeteil 20 und der Formteil 21 in Längsrichtung des Randes 6 geteilt. Die Teilungsebene steht im wesentlichen senkrecht zur Zeichenebene und liegt somit im wesentlichen in der nachfolgend noch näher zu erläuternden Entformungsrichtung. Ggfs. kann der Einlegeteil 20, beispielsweise in der Mittenebene 23 erfindungsgemäß geteilt sein. Wesentlich ist jedoch, daß der Einlegeteil 20 eine hinreichende Biegsamkeit oder Flexibilität derart aufweist, daß er aus dem Rand herausgezogen werden kann. Hierbei erfolgt eine Bewegung des Einlegeteil in Auszugsrichtung, also senkrecht zur Zeichenebene, und darüberhinaus eine Bewegung in den beiden zueinander senkrechten Richtungen entsprechend der beiden Pfeile 17 und 19. Selbst wenn erfindungsgemäß nur ein einziger Einlegeteil 20 vorgesehen ist, kann aufgrund der hinreichenden Flexibilität des Einlegeteiles dieser aus dem Rand 6 herausgewunden werden. Der gebogene feste Formteil 21 schließt erfindungsgemäß unmittelbar an entsprechende gerade Formteile 21 für die geraden Teile des Randes 4 an; diese geraden Formteile füllen die geraden und rechtwinkelig zueinander angeordneten Teile des Randes 4 vollständig aus. Die geraden Formteile und der gebogene Formteil sind erfindungsgemäß integraler Bestandteil des Formträgers 22 und bilden eine zuverlässige Abstützung des gebogenen, flexiblen Einlegeteiles 20. Durch diese wesentliche Ausgestaltung wird eine unzulässige Verschiebung oder Verformung beim Tiefziehen ausgeschlossen. Die beim Tiefziehen auf den Einlegeteil 20 einwirkenden Kräfte können höchstens zu einer gewissen Zusammenpressung des Einlegeteiles führen, ohne daß hierbei ein unzulässiges Verrutschen oder Verschieben des Einlegeteiles zu befürchten ist.

In Fig. 3 ist vergrößert ein Schnitt durch den Rand 6 dargestellt. Der starre Formteil 21 und der flexible Einlegeteil 20 stehen entgegen der Entformungsrichtung 42 über die Grundfläche 35 des Formträgers 22 vor, um den vorstehenden Rand zu bilden. Der Einlegeteil 20 besteht aus einem flexiblen Material und im Rahmen der Erfindung

Patentanwalt Dipl.-Phys. HANS KLOSE
Zugelassener Vertreter vor dem Europäischen Patentamt  – 10 –

6700 Ludwigshafen
Kurfür 0207144

insbesondere aus einem PU-Schaum oder einem Integralschaum. Derartige Werkstoffe weisen einerseits die erfindungsgemäße Flexibilität auf und sind andererseits erfindungsgemäß hinreichend formstabil, um die Formung des
Wulstes 12 zu ermöglichen. Der Einlegeteil 20 ist zumindest an der mit dem verformbaren Werkstoff in Berührung
gelangenden Oberfläche 27 verfestigt bzw. versteift. Dies
kann bei den besagten Schaumstoffen durch elektrostatisches Vernetzen der Oberfläche erfolgen. Hierdurch wird im
Rahmen der Erfindung zum einen der Abrieb reduziert und
zum anderen die Formbeständigkeit nicht unwesentlich verbessert. Der Einlegeteil 20 weist eine über die Seitenwand
31 des Formträgers 22 nach außen weisende Ausbuchtung 32
zur Bildung des Wulstes 12 auf. Der Wulst 12 steht nach
außen über die äußere Wand, die als eine vertikale
Seitenfläche 14 ausgebildet ist, hervor, wobei die Außenfläche 34 des Wulstes 12 unten kontinuierlich an die vertikale Seitenfläche 14 anschließt. Entsprechend schließt
die Außenfläche 34 des Wulstes 12 oben an die im wesentlichen horizontale Oberfläche 36 des Randes 6 an. Im Bereich des Randes 6 ist der innere Formteil 21 des Formträgers 22 gestuft ausgebildet, wobei zwei vertikale, und
zwar versetzt zueinander liegende Anlageflächen 38 vorhanden sind. Der Einlegeteil 20 weist entsprechende Anlageflächen 39 auf. Die Anlageflächen 38 und 39 verlaufen
entsprechend der Krümmung des Randes 6 ebenfalls gebogen,
und sie erstrecken sich im wesentlichen in der Entformungsrichtung 42, die durch den Pfeil angedeutet ist. Es
versteht sich, daß im Rahmen der Erfindung eine gewisse
Konizität zweckmäßig ist, um das Entfernen des Formträgers
22 mit dem Formteil 21 zu erleichtern.

Die unteren Auflageflächen 40 sind erfindungsgemäß nach
innen etwas geneigt ausgebildet, um eine sichere Auflage
des Einlegeteils 20 zu erhalten; besondere Befestigungselemente werden hierdurch entbehrlich, und beim Tiefziehen
ist ein Verschieben des Einlegeteils 20, der erfindungsgemäß aus mehreren Teilen bestehen kann, nicht zu befürchten. Aufgrund der geneigten Anordnung der Flächen 40 wird

0207444

der Einlegeteil 20 in die entsprechenden Flächen des Formteiles 21 des Formträgers 22 eingehängt. Das Einhängen
über die Auflageflächen 40 verhindert ein unerwünschtes
Abkippen nach außen bei den Vorbereitungen zum Tiefziehen.
Der Formteil 21 ist, wie dargestellt, zweckmäßigerweise
einstückig mit dem Formträger 22; im Rahmen der Erfindung
liegen auch mehrteilige Ausgestaltungen von Formträger und
Formteil. Die Gesamthöhe des Einlegeteils 20 sowie des
Wulstes 12 ist im wesentlichen gleich groß wie die der
Innenwand 13.

Eine alternative Ausführungsform sei anhand von Fig. 3
noch erläutert. Wie durch die strichpunktierten Linien
angedeutet, ist die äußere Wand des Bauteiles 2 weiter
nach außen versetzt, so daß eine Hinterschneidung 44 vorhanden ist. Der Einlegeteil 20 kann problemlos entsprechend ausgebildet sein, um eine derartige Hinterschneidung
im Bauteil herstellen zu können. Beim Entformen muß auch
für diese Ausführungsvariante zunächst der Formträger 22
mit dem Formteil 21 in der Entformungsrichttung 42 aus dem
tiefgezogenen Bauteil 2 entfernt werden. Nachfolgend wird
in der erfindungsgemäßen Weise der flexible Einlegeteil 20
etwas nach innen, also in der Zeichnung nach links, gezogen, um nachfolgend bei nachgiebiger, elastischer Verformung nach unten in der Entformungsrichtung 42 aus dem
Bauteil 2 herausgezogen zu werden. Zur Herstellung des
nächsten Bauteiles wird dann erfindungsgemäß der flexible
Einlegeteil 20 wieder auf den Formträger 22 sowie den
Formteil 21 in der dargestellten Weise aufgesetzt, wobei
aufgrund der geneigt angeordneten Auflageflächen 40 ein
Abkippen oder unbeabsichtigtes Lösen des Einlegeteiles 20
verhindert wird. Mit dem derart ausgebildeten Einlegeteil
kann eine Vielzahl von Bauteilen nacheinander hergestellt
werden.

Patentanwalt Dipl.-Phys. HANS KLOSE
Zugelassener Vertreter vor dem Europäischen Patentamt  – 12 –

6700 Ludwigshaf
Kurfürstenstraße 0207444

## Bezugszeichenliste

| | |
|---|---|
| 2 | Duschtasse |
| 4, 6 | Rand |
| 8 | Innenraum |
| 10 | Bodenfläche |
| 11 | Ebene |
| 12 | Wulst |
| 13 | innere Wand |
| 14 | äußere Wand |
| 15 | gestrichelte Linie |
| 17, 19 | Pfeil |
| 20 | Einlegeteil |
| 21 | Formteil |
| 22 | Formträger |
| 23 | Mittenebene |
| 27 | Oberfläche von 20 |
| 31 | Seitenwand von 22 |
| 32 | Ausbuchtung |
| 34 | Außenfläche |
| 35 | Grundfläche |
| 36 | obere Fläche |
| 38, 39 | Anlagefläche |
| 40 | Auflagefläche |
| 42 | Entformungsrichtung |
| 44 | Hinterschneidung |

**Patentanwalt Dipl.-Phys. HANS KLOSE**
Zugelassener Vertreter vor dem Europäischen Patentamt   – 13 –

**6700 Ludwigshafen**
Kurfürstenstraße 32

**0207444**

## Patentansprüche

1. Verfahren zum Tiefziehen eines Bauteiles (2), insbesondere einer Duschtasse, aus einem verformbaren Werkstoff, bei welchem Verfahren aus dem Bauteil (2) ein Formträger (22), der insbesondere ein Formteil (21) aufweist, entfernbar ist, wobei dem Formträger (22) ein quer zur Entformungsrichtung (42) sich erstreckender Einlegeteil (20) zugeordnet ist, um in dem Bauteil (2) einen vorstehenden Wulst (12) und/oder eine Hinterschneidung (44) herzustellen,

dadurch gekennzeichnet, daß der Einlegeteil (20) aus einem teilweise flexiblen Werkstoff, insbesondere PU-Schaum oder Integralschaum, besteht und in einer Ebene (11) im wesentlichen quer zur Entformungsrichtung (42) auf dem Formträger (22) angeordnet wird, wobei in dieser Ebene (11) eine Ausbuchtung (32) über eine Seitenwand (31) des Formträgers (22) vorsteht,

daß aus dem Bauteil (2) zunächst der Formträger (22) und/oder der Formteil (21) in der Entformungsrichtung (42) entfernt wird

und daß der im Bauteil (2) verbliebene flexible Einlegeteil unter nachgiebiger Verformung anschließend aus dem Bauteil (2) herausgezogen wird.

2. Verfahren nach Anspruch 1, dadurch gekennzeichnet, daß der Formteil (21) sowie der Einlegeteil (20) entgegen der Entformungsrichtung (42) über eine Grundfläche (35) des Formträgers (22) vorstehend angeordnet werden, um einen zumindest teilweise bogenförmig verlaufenden Rand (6) mit einem Wulst (12) und/oder einer Hinterschneidung (44) herzustellen, die einen Innenraum (8) zumindest teilweise umgeben.

3. Verfahren nach Anspruch 1 oder 2, dadurch gekennzeichnet, daß der Wulst (12) an dem zumindest teilweise bogenförmig verlaufenden Rand (6) und/oder einer Wand (14) vorgesehen wird, wobei der Rand (6) mit im wesentlichen rechtwinkelig zueinander angeordneten Randteilen (4) einen Innenraum (8) des Bauteiles (2) umgibt.

4. Verfahren nach einem der Ansprüche 1 bis 3, dadurch gekennzeichnet, daß die Breiten, und zwar senkrecht zur Entformungsrichtung (42), des Einlegeteiles (20) und des Formteiles (22) derart aufeinander abgestimmt sind, daß nach dem Entfernen des Formteiles (21) aus dem Rand (6) der Einlegeteil (20) mit der Ausbuchtung (32) aus dem Wulst (12) herausgelöst und aus dem Rand (6) entfernt werden kann.

5. Verfahren nach einem der Ansprüche 1 bis 4, dadurch gekennzeichnet, daß der Formträger (22) und/oder der Formteil (21) mit Auflageflächen (40) versehen sind, die zum Innenraum (8) hin und ferner in Abzugsrichtung (42) geneigt angeordnet sind, und daß der Einlegeteil (20) mit entsprechenden Anlageflächen in diese Auflageflächen (40) eingesetzt wird.

6. Verfahren nach einem der Ansprüche 1 bis 5, dadurch gekennzeichnet, daß der Einlegeteil (20) zumindest an den mit dem verformbaren Werkstoff des Bauteiles (2) in Berührung gelangenden Oberflächen (27) versteift und/oder verfestigt ist.

7. Anordnung zur Herstellung eines Bauteiles nach einem der vorhergehenden Ansprüche, dadurch gekennzeichnet, daß der Formträger (22) einen inneren Formteil (21) aufweist, der einen Innenraum (8) umgibt, wobei einem gebogenen Bereich des Formteiles (21) ein Einlegeteil (20) zugeordnet ist, der eine nach außen weisende Ausbuchtung für einen Wulst (12) und/oder eine Hinterschneidung (44) im Rand (6) des Bauteiles (2) aufweist.

Patentanwalt Dipl.-Phys. HANS KLOSE
Zugelassener Vertreter vor dem Europäischen Patentamt   – 15 –

6700 Ludwigshafen
Kurfürstenstraße 32

**0207444**

8. Anordnung nach Anspruch 7, dadurch gekennzeichnet, daß der flexible Einlegeteil (20) und der starre Innenteil (21) mit gebogenen und in Richtung des Randes (6) verlaufenden Anlageflächen (38, 39) aneinanderliegen und/oder sich im wesentlichen über die gesamte Höhe des Randes (6) erstrecken, wobei die Höhe des nach außen vorstehenden Wulstes (12) bevorzugt im wesentlichen gleich groß ist wie die Höhe der Innenwand (13) des Randes (6).

9. Anordnung nach Anspruch 7 oder 8, dadurch gekennzeichnet, daß der Einlegeteil (20) und der Formteil (21) derart ausgebildet sind, daß die Außenfläche (34) des Wulstes (12) oben kontinuierlich an die obere, im wesentlichen horizontale Fläche (36) des Randes (6) und unten an den im wesentlichen vertikalen restlichen Teil der Außenwand (14) des Bauteiles (2) anschließt.

10. Anordnung nach einem der Ansprüche 7 bis 9, dadurch gekennzeichnet, daß der Einlegeteil (20), der sich insbesondere über die gesamte Höhe des Randes (6) erstreckt, aus einem flexiblen Werkstoff derart besteht, daß er nach dem Abziehen des Innenteiles beim Entformen aus dem gebogenen Rand (6), der den Wulst (12) und/oder eine Hinterschneidung (44) aufweist, entfernbar ist.

0207444

FIG.1

FIG. 2

FIG. 3